# EUROPÄISCHE PATENTSCHRIFT

(11) **EP 1 936 784 B1**
(45) Veröffentlichungstag und Bekanntmachung des Hinweises auf die Patenterteilung: **01.07.2009**
(21) Anmeldenummer: 07405367.9
(22) Anmeldetag: 21.12.2007
(51) Int. Cl.: H02K 15/085

(54) **Vorrichtung zum Wickeln von Statoren von Elektromotoren**
Device for coiling stators of electric motors
Dispositif destiné à l'enroulement de stators de moteurs électriques

(30) Priorität: 22.12.2006 CH 21032006
(43) Veröffentlichungstag der Anmeldung: 25.06.2008
(73) Patentinhaber: ATS Wickel- und Montagetechnik AG, 5436 Würenlos (CH)
(72) Erfinder: Bolli, Thomas, 5313 Klingnau (CH); Ulrich, Peter, 8964 Rudolfstetten (CH); Wyss, Vincens, 5420 Ehrendingen (CH); Meier, Konrad, 8108 Dällikon (CH)
(74) Vertreter: Wiedmer, Edwin

(56) Entgegenhaltungen:
- EP-A- 1 286 452
- EP-A- 1 467 466
- CH-A- 444 950
- US-A- 5 370 324
- US-A- 5 906 331

## Beschreibung

### Technisches Gebiet

Die Erfindung betrifft eine Vorrichtung zum automatischen Wickeln von Spulen in Nuten eines Stators einer elektrischen Maschine, mit einer in einer Längsachse axial verschiebbaren Wickelstange, einer von der Wickelstange rechtwinklig zur Längsachse in einer Verschieberichtung abragenden Wickelnadel und einer ringförmigen Spannvorrichtung einer Statoraufnahme mit in der Längsachse liegender Aufnahmeachse.

### Stand der Technik

Elektromotoren mit Einphasen- oder Dreiphasenwicklung für Wechsel- oder Drehstrombetrieb oder regelbare Gleichstrommotoren werden heute in grossen Mengen als Antriebe oder in Geräten wie Lüftern, Kühlaggregaten etc. verwendet. Bezüglich ihrer Bauart wird zwischen Innenläufer- und Aussenläufermotoren unterschieden.

Das Bewickeln des Stators eines Innenläufermotors erfolgt heute überwiegend nach dem Winding/Insert-Verfahren. Hierbei handelt es sich um ein Einziehverfahren, bei dem auf einer ersten Station die entsprechenden Feldspulen in ein so genanntes Einziehwerkzeug gewickelt und auf einer zweiten Station alle Spulen gleichzeitig in die Nuten des isolierten Statorpakets eingezogen werden.

Das Einziehverfahren weist jedoch folgende Nachteile auf:
- Nach dem Einziehen der Spulen in das Statorpaket müssen die Wickelköpfe auf einer separaten Station geformt und gepresst werden.
- Auf einer weiteren Maschine müssen die Wickelköpfe fixiert, d.h. mit einem Faden automatisch oder manuell abgebunden werden.
- An den Spulenenden müssen Litzen für das Weiterschalten der Wicklung befestigt werden, was meistens manuell durchgeführt werden muss.

Zudem erfordert eine Fertigung nach dem Einziehverfahren hohe Investitionskosten an Maschinen, Wickelwerkzeugen und Hilfsvorrichtungen, wodurch bei kleineren und mittleren Stückzahlen die Wirtschaftlichkeit nicht immer gewährleistet ist.

Aus der EP-A-1 286 452 ist eine Vorrichtung zum Bewickeln von Statoren mit mehreren Spulen bekannt. Beim Umwickeln der einzelnen Polhörner wird der Draht über einen die erforderlichen Wickelbewegungen ausführenden Drahtführer direkt um jedes Polhorn bzw. in einander benachbarte Nuten gewickelt. Der Drahtführer ist zur Ausführung einer Hubbewegung mit einer oszillierenden Wickelstange und zur Ausführung einer ersten Verschiebebewegung mit einer verschiebbaren Halterung verbunden. Eine zweite Verschiebebewegung wird vom Stator als Drehbewegung um eine Nutteilung über einen mit dem Stator gekoppelten Schaltapparat ausgeführt.

Zur Wicklung von Spulen mit einer Spulenweite von mehr als einer Nutteilung, wie sie beispielsweise bei Statoren von Gleich- oder Drehstrommotoren vorhanden sind, kann die aus der EP-A- 1 286 452 bekannte Vorrichtung nicht eingesetzt werden.

Die EP-A-1 467 466 offenbart einen Stator einer elektrischen Maschine, der eine Direktwicklung der einzelnen Feldspulen auch bei Spulenweiten von mehr als einer Nutteilung ermöglicht. Der Stator weist in bekannter Art eine Vielzahl von rotationssymmetrisch zu einer Statorachse angeordneten, radial einwärts ragenden, zwischen zwei Stirnseiten des Stators verlaufenden und Nuten begrenzenden Polhörnern auf. An jeder Stirnseite des Stators ist eine Endscheibe aus einem elektrisch isolierenden Material mit konzentrisch zur Statorachse angeordneten und von der Endscheibe axial abragenden Führungsstegen so festgelegt, dass jedem Polhorn ein Führungssteg als Leitelement für einen stirnseitig entsprechend einem vorgegebenen Wickelschritt von einer ersten Nut zu einer zweiten Nut verlaufenden Draht einer zu wickelnden Spule zugeordnet ist. Die Endscheibe dient einerseits als Isolation gegenüber dem Eisen des Stators und andererseits zur Fixierung der Wicklung.

Aus der EP-A-1 467 466 ist auch eine zum automatischen Wickeln von Spulen in Nuten eines mit den erwähnten Endscheiben ausgestatteten Stators geeignete, auf der in der EP-A-1 286 452 offenbarten Wickelmaschine aufbauende Vorrichtung bekannt. Diese umfasst einen Drahtführer, der mit einer axial in einer ersten Richtung eine Hubbewegung ausführenden Hubstange und mit einer in einer zweiten Richtung rechtwinklig zur ersten Richtung verschiebbaren Wickelstange verbunden ist, und einen Schaltapparat, der zur Ausführung einer Drehbewegung um eine in der ersten Richtung liegende Drehachse mit einem zu bewickelnden Stator verbindbar ist. Die Vorrichtung zeichnet sich weiter aus durch zwei Drahtfanghaken, wobei die Längsachsen der Drahtfanghaken in der zweiten Richtung liegen und die Drahtfanghaken in der ersten und zweiten Richtung verschiebbar sind. Die räumliche Lage der Drahtfanghaken ist durch Drehen um 90° um die Drahtfanghakenachse zwischen einer ersten Position mit einer in der ersten Richtung liegenden Hakenebene und einer zweiten Position mit einer rechtwinklig zur ersten Richtung liegenden Hakenebene einstellbar. Die Verschiebe- und Drehbewegung der Drahtfanghaken sind mit den Hubbewegungen des Drahtführers und der Drehbewegung des Schaltapparates zur Ausführung der zum Verlegen eines Drahtes zu Spulenwindungen erforderlichen Bewegungen des Drahtführers und der Drahtfanghaken synchronisiert.

### Darstellung der Erfindung

Der Erfindung liegt die Aufgabe zugrunde, eine Vorrichtung der eingangs genannten Art konstruktiv einfacher zu gestalten. Zudem soll die Vorrichtung hohe Wickelgeschwindigkeiten bei allen Statorgrössen ermöglichen.

Die Erfindung ist durch die Merkmalskombination des Anspruchs 1 definiert. Bevorzugte Ausgestaltungen der Erfindung sind Gegenstand der abhängigen Ansprüche.

Zur erfindungsgemässen Lösung der Aufgabe führt, dass die Wickelnadel über eine im Innern der Wickelstange und koaxial zu dieser in der Längsachse verschiebbar gelagerte Steuerstange in Verschieberichtung verschiebbar ist und die Wickelstange und die Steuerstange zur programmgesteuerten axialen Verschiebung der Wickelstange und der Steuerstange in der Längsachse und gegebenenfalls die Wickelnadel zur Ausführung einer programmgesteuerten Schwenkbewegung um die Achse der Wickelstange mit einer Antriebseinheit wirkverbunden sind.

Die Erfindung ermöglicht es, mittels einer oszillierenden, um die Längsachse schwenkbaren und während eines Umlaufs in ihrer Position veränderbaren Wickelnadel die Drähte in die jeweilige Nutöffnung des Statorpaketes zu wickeln und an der Stirnseite des Stators in einer überlagerten, bogenförmigen Bewegung den Draht über die Wickelkopf-Abstützung in die folgende, dem Wickelschritt entsprechende Nut, zu verlegen.

Bevorzugt sind die Spannvorrichtungen der Statoraufnahmen zur Ausführung einer Rotationsbewegung um die Aufnahmeachse mit einem programmgesteuerten Antrieb wirkverbunden, wobei zweckmässigerweise zwei Statoraufnahmen mit je einer Spannvorrichtung auf einem Drehtisch angeordnet und die Spannvorrichtungen mit einem programmgesteuerten Antrieb wirkverbunden sind.

Bevorzugt ist die Wickelnadel an einem parallel zur Wickelstange verlaufenden und zur Ausführung der Schwenkbewegung der Wickelnadel mit der Antriebseinheit wirkverbundenen Führungselement in der Längsachse gleitend verschiebbar gelagert. Hierbei kann die Wickelnadel in einem Längsspalt eines mit einem programmgesteuerten Antrieb wirkverbundenen und in der Antriebseinheit gelagerten Schwenkgehäuses gleitend verschiebbar geführt sein.

Zweckmässigerweise ist die Antriebseinheit mit dem Schwenkgehäuse mit einem programmgesteuerten Antrieb auf einem Schlitten in der Längsachse verfahrbar.

Bevorzugt ist das Schwenkgehäuse an seinem der Antriebseinheit fernen Ende über Stütz- und Positionierelemente stütz- und schwenkbar und vorzugsweise mit einer Stützvorrichtung verbindbar, wobei das Schwenkgehäuse zur Ausführung der Schwenkbewegung zweckmässigerweise in der Stützvorrichtung mit einem synchron zur Antriebseinheit geschalteten programmgesteuerten Antrieb wirkverbunden ist.

Wenn die Statoraufnahmen auf einem Drehtisch montiert sind, ist die Stützvorrichtung bevorzugt in der Drehachse des Drehtisches angeordnet.

Die Wickelnadel ist mit der Steuerstange bevorzugt über ein Hebelgelenk verbunden.

Bei einer besonders bevorzugten Ausführungsform der erfindungsgemässen Vorrichtung ist die Wickelnadel programmgesteuert in der durch die Längsachse und die Verschieberichtung definierten Ebene um die Verschieberichtung schwenkbar ist. Der Schwenkwinkel liegt bevorzugt zwischen etwa ± 30° und ± 60°, insbesondere bei etwa ± 45° symmetrisch um die Verschieberichtung. Durch diese gesteuerten Bewegungsablauf der Wickelnadel erfolgt eine zwangsläufige Verlegung der Drähte am Paketende, d.h. es bildet sich ein kompakter Wickelkopf auf beiden Stirnseiten des Stators.

Der grosse Vorteil dieser Lösung liegt darin, dass mit der gesteuerten Wickelnadel auf jede Art von Wickelformen oder sonstigen Leitstücken verzichtet werden kann, was in der Fachwelt als formenloses Wickeln bezeichnet wird.

Das neue Maschinenkonzept mit der gesteuerten Wickelnadel hat folgende Vorteile:
- Das direkte Einwickeln der Spulen in die Nuten erfordert weniger Hilfswerkzeuge, d.h. Investitionskosten werden tief gehalten.
- Das direkte Einwickeln der Spulen in die Nuten erfolgt ohne Wickelformen.
- Eine geordnete Drahtverlegung im Bereich der Wickelköpfe ergibt kürzere Wickelköpfe und einen höheren Füllfaktor
- Kürzere Wickelköpfe führen zu einer Ersparnis an Kupferdraht.
- Paralleles Wickeln von mehreren Drähten gleichzeitig ist ebenfalls möglich.
- Kleine bewegte Massen bei allen Statorgrössen erlauben hohe Wickelgeschwindigkeiten.
- Wickelparameter sind für jede Statorgrösse programmierbar.
- Eine exakte Drahtverlegung in den Nuten führt zu einem höheren Füllfaktor.
- Zum Fixieren der Wickelköpfe ist weniger Handarbeit nötig.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf einen Stator mit Endscheiben;
- Fig. 2: eine Seitenansicht einer Anlage zum Wickeln von Statoren;
- Fig. 3: eine erste Schrägsicht auf die Anlage von Fig.1;
- Fig. 4: eine zweite Schrägsicht auf die Anlage von Fig.1;
- Fig. 5: einen Längsschnitt durch einen Teil der Anlage von Fig. 1;
- Fig. 6 - 9: eine Seitenansicht eines Wickelnadelhalters mit schwenkbarer Wickelnadel in verschiedenen Wickelpositionen;
- Fig. 10 - 15: den Funktionsablauf beim Wickeln eines Stators mit dem Wickelnadelhalter von Fig. 6;
- Fig. 16: ein Wickelschema für einen Stator eines Motors mit Dreiphasenwicklung;
- Fig. 17: die Form einer einzelnen Drahtwindung.

### Beschreibung von Ausführungsbeispielen

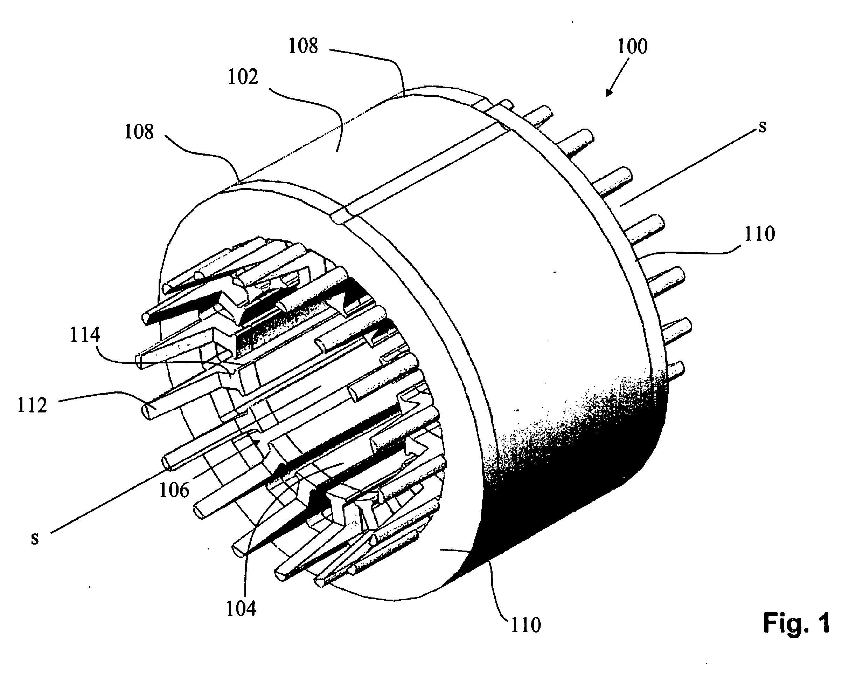

Ein in Fig. 1 gezeigter Stator 100 besteht im wesentlichen aus einem ringförmigen Blechpaket 102 mit von diesem radial nach innen abragenden Polhörnern 104, die durch Zwischenräume in Form von Nuten 106 voneinander getrennt angeordnet sind. Der beispielhaft dargestellte 18-polige Stator 100 ist Teil eines Innenläufer-Motors. Der Stator 100 wird durch Schichten von identischen Blechlamellen zu einem Blechpaket hergestellt.

An jeder Stirnseite 108 des Stators 100 eine Endscheibe 110 ist ringförmige Endscheibe 110 aus einem elektrisch isolierenden Kunststoffmaterial angeordnet. Von jeder Endscheibe 110 ragen konzentrisch zur Statorachse s angeordnete Führungsstege 112 auf. Die Endscheiben 110 werden positionsgenau so aufgepresst, dass jedes Polhorn 104 in seiner axialen Verlängerung in einen Führungssteg 112 übergeht. Die Führungsstege 112 dienen der Führung eines stirnseitig entsprechend einem vorgegebenen Wickelschritt von einer ersten Nut 106 zu einer zweiten Nut 106 verlaufenden Drahtes während der Wicklung einer Spule. Jeder Führungssteg 112 weist einen auf der Stirnseite jedes Polhornes 104 aufliegenden und dem Querschnitt der Polhörner 104 angepassten Fussteil 114 auf.

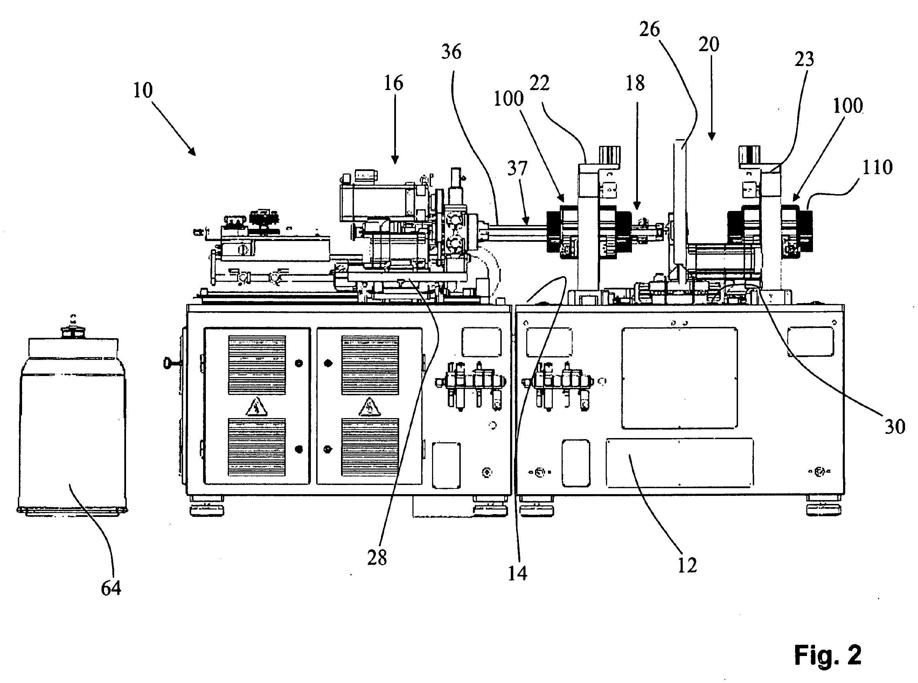

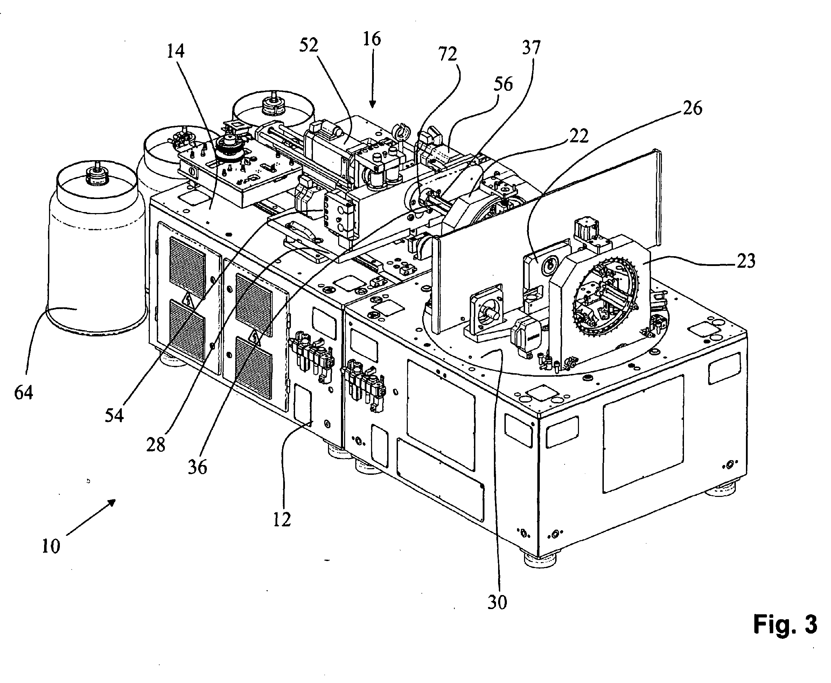

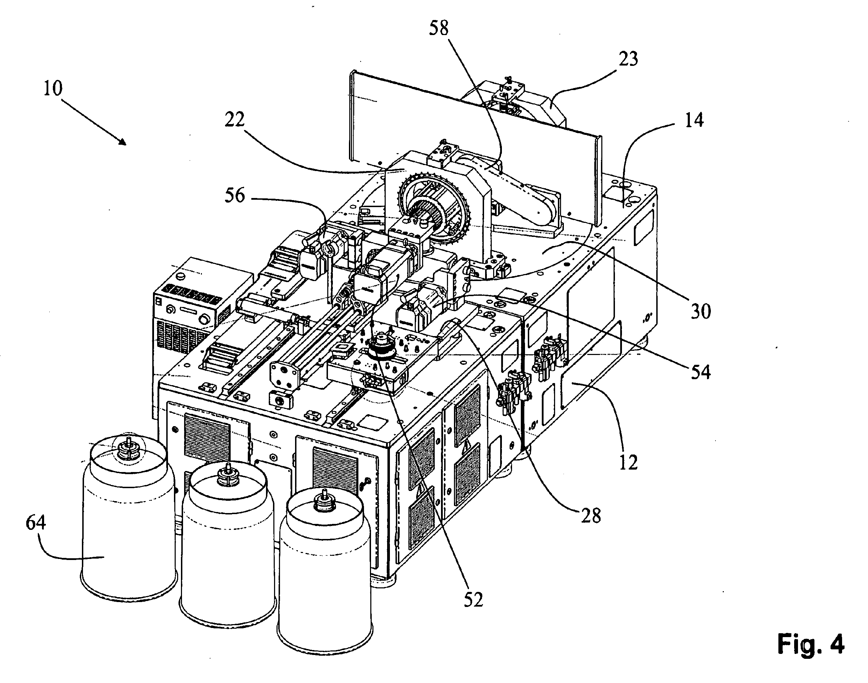

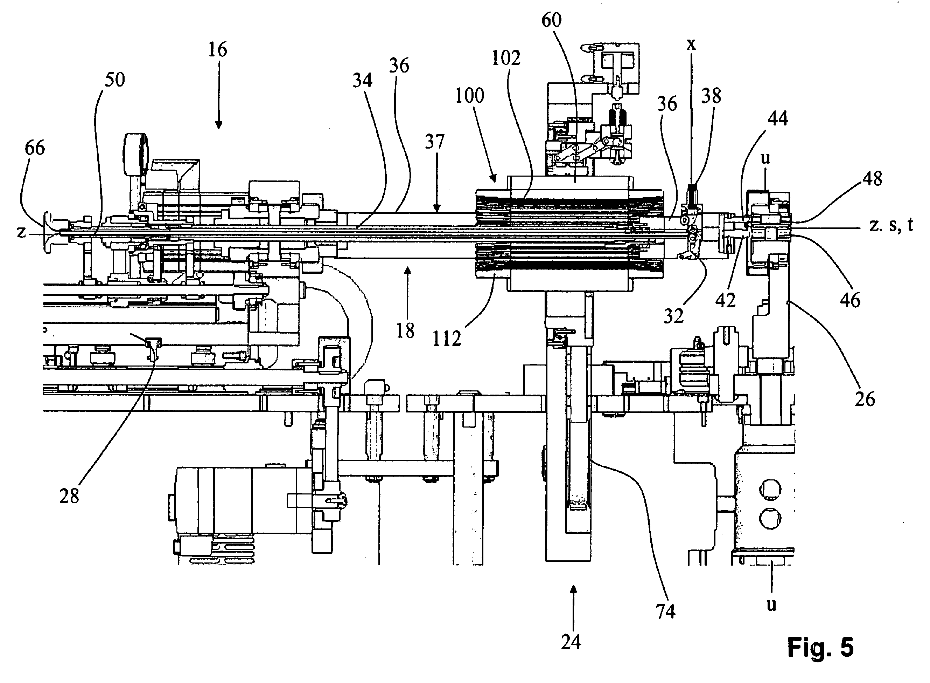

Eine in den Figuren 2 bis 5 dargestellte, einen Maschinenrahmen 12 mit horizontaler Montageebene 14 aufweisende Anlage 10 zum Wickeln von Statoren von Elektromotoren umfasst als wesentliche Maschineneinheiten eine Antriebseinheit 16, eine Wickeleinheit 18, ein Beschickungssystem 20 mit zwei Statoraufnahmen 22, 23, eine Statorpositioniervorrichtung 24 und eine Stützvorrichtung 26 für die Wickeleinheit 18.

Die auf einem in einer Längsachse z verschiebbaren Schlitten 28 montierte Antriebseinheit 16 beinhaltet alle Elemente und NC-Achsen, die für die Bewegung und Synchronisation der Wickeleinheit 18 erforderlich sind.

Die Wickeleinheit 18 umfasst ein mit der Antriebseinheit 16 wirkverbundenes Schwenkgehäuse 36 und eine als Spindel mit grosser Ganghöhe ausgestaltete, mit der Antriebseinheit 16 wirkverbundene und im Schwenkgehäuse 36 in der Längsachse z verschiebbar gelagerte Wickelstange 34, an deren freiem, der Antriebseinheit 16 entfernt liegenden Ende eine oder mehrere parallele Wickelnadeln 38 - auch als Drahtführerdüsen bezeichnet - festgelegt sind. Das Schwenkgehäuse 36 ist mit seinem der Antriebseinheit 16 zugewandten Ende an einem mit der Antriebseinheit 16 wirkverbundenen Ringflansch 72 festgelegt.

Vom Schwenkgehäuse 36 ragt in der Längsachse z der Wickelstange 34 in deren Verlängerung ein zentraler Stützzapfen 42 ab. In einem radialen Abstand zum zentralen Stützzapfen 42 ragt parallel zu diesem ein Mitnehmerzapfen 44 vom Schwenkgehäuse 36 ab. Der Stützzapfen 42 und der Mitnehmerzapfen 44 liegen dabei in der durch die Längsachse z der Wickelstange 34 und der Längs- und Verschieberichtung x der Wickelnadel/n 38 definierten Ebene, die bei der gezeigten Anlage 10 rechtwinklig zur horizontalen Montageebene 14 steht.

Die Wickelstange 34 ist in ihrer der Längsachse z entsprechenden Achsrichtung zur Ausführung einer in der Längsachse z oszillierenden Bewegung innerhalb des Schwenkgehäuses 36 gelagert. Im Innern der Wickelstange 34 und koaxial zu dieser gelagert ist eine relativ zur Wickelstange 34 in der Längsachse z verschiebbare Steuerstange 50. Die Steuerstange 50 ist als Spindel mit geringer Ganghöhe ausgestaltet und mit der Antriebseinheit 16 wirkverbunden. Eine Längsverschiebung der Steuerstange 50 innerhalb der Wickelstange 34 bewirkt über ein im Inneren des Schwenkgehäuses 36 an der Wickelstange 34 und an der Steuerstange 50 angelenktes Hebelgelenk 32 eine Bewegung der senkrecht zur Längsachse z der Wickelstange 34 und der Steuerstange 50 aus dem Längsspalt 37 des Schwenkgehäuses 36 herausragenden Wickelnadel/n 38 entlang einer senkrecht zur Längsachse z liegenden Verschieberichtung x.

Das Beschickungssystem 20 ist bei der gezeigten Anlage 10 als Schwenkrevolver oder Drehtisch 30 mit zwei an der Peripherie des Drehtisches 30 bezüglich einer Drehachse u einander diametral gegenüber stehenden Statoraufnahmen 22, 23 mit Aufnahmeachsen t ausgebildet. Während des Wickelbetriebs der Anlage 10 ist der Drehtisch 30 so positioniert, dass die Aufnahmeachsen t der beiden Statoraufnahmen 22, 23 mit der Längsachse z der Wickelstange 34 zusammenfallen. Bei dieser Ausführung kann, während bei der einen Statoraufnahme 22 ein Stator gewickelt wird, bei der anderen Statoraufnahme 23 ein fertig gewickelter Stator gegen einen zu bewickelnden Stator 100 ausgetauscht werden.

Zwischen den beiden Statoraufnahmen 22, 23 im Zentrum des Drehtisches 30 ist die Stützvorrichtung 26 frei drehbar gelagert. Die Stützvorrichtung 26 weist eine zentrale Aufnahme 46 für den Stützzapfen 42 und eine in radialem Abstand zu diesem angeordnete Aufnahme 48 für den Mitnehmerzapfen 44 auf. Die Aufnahmen 46, 48 sind als Bohrungen auf einer über einen Zahnriemenantrieb 76 um die Achse der zentralen Aufnahme 46 drehbaren Radscheibe ausgeführt. Der Antrieb 76 ist mit der Antriebseinheit 16 synchronisiert.

Jede Statoraufnahme 22, 23 weist eine drehbar gelagerte Spannvorrichtung 60 zum Fixieren des Stators 100 in der Spannvorrichtung 60 auf. Weiter ist ein programmgesteuerter Antrieb zur Positionierung des Stators 100 in eine zur Wicklung einer ersten Spule vorgesehenen ersten Wickelposition und zur Ausführung einer gesteuerten Drehbewegung der Spannvorrichtung 60 zum Weiterschalten des in der Spannvorrichtung 60 der Statoraufnahme 22, 23 fixierten Stators 100 in eine jeweils nächste Wickelposition zum Wickeln der weiteren Spulen in weitere Nutenpaare vorgesehen.

Nachfolgend ist der Funktionsablauf für das Wickeln einer Spule in einen Stator 100 wiedergegeben.

Der beispielsweise aus drei Einzeldrähten bestehende Wickeldraht 116 wird von in Drahtvorratsbehältern 64 gelagerten Drahtspulen über einen Einlauftrichter 68 durch die als Hohlwelle ausgebildete Steuerstange 50 hindurch zu den drei Wickelnadeln 38 geführt.

Ein Stator 100 mit stirnseitigen Endscheiben 110 wird an seinem Aussendurchmesser in die Spannvorrichtung 60 einer der Statoraufnahmen 22, 23 eingespannt. Die Positionierung und das Weiterschalten des Stators 100 relativ zur Lage der Wickelnadel 38 erfolgt über einen der Spannvorrichtung 60 zugeordneten programmierbaren Antrieb 74.

Der Schlitten 28 mit darauf montierter Antriebseinheit 16 mit von dieser in der Längsachse z abragender Wickeleinheit 18 mit dem Schwenkgehäuse 36 wird mittels eines programmgesteuerten Antriebs in der Längsachse z durch den zu bewickelnden, in der Spannvorrichtung 60 der Statoraufnahme 22 eingespannten Stator 100 hindurch bis zum Eingriff des zentralen Stützzapfens 42 und des Mitnehmerzapfens 44 mit der in der Stützvorrichtung 26 angeordneten zentralen Aufnahme 46 bzw. der Mitnehmeraufnahme 48 verschoben. Nach Vorgabe der Dimensionen des zu bewickelnden Stators 100 wird die Wickelnadel 38 über das an der Wickelstange 34 und an der Steuerstange 50 angelenkte Hebelgelenk 32 durch Verschieben der Steuerstange 50 über einen programmierbaren Antrieb 54 in die individuell auf den zu bewickelnden Stators 100 abgestimmte Wickelposition gebracht. Über einen programmierbaren Antrieb 52 wird die Wickelstange 34 in der Längsachse z um eine vorgegebene Länge in der einen Richtung bewegt. Dabei wird das mit einer Durchführungsöffnung für den zu verlegenden Wickeldraht versehene freie Ende der durch den Längsspalt 37 aus dem Schwenkgehäuse 36 herausragende Wickelnadel 38 über einer ersten Nut 106 a von einer Statorseite auf die andere Statorseite über die freien Enden der Führungsstege 112 hinaus geführt. Nach einer das Einlegen des Wickeldrahtes in die Nut bewirkenden Verschiebung der Wickelnadel 38 radial nach Aussen erfolgt über einen programmierbaren Antrieb 56 eine Schwenkbewegung des Schwenkgehäuses 36 und damit des die Wickelnadel 38 in ihrer Bewegung in der Längsachse z führenden Längsspaltes 37 zur Positionierung der Wickelnadel 38 im Bereich der zweiten Nut 106 b. An dieser Stelle erfolgt eine Verschiebung der Wickelnadel 38 radial nach Innen, bis das den Wickeldraht führende freie Ende der Wickelnadel 38 über der zweiten Nut 106 b positioniert ist. Über den programmierbaren Antrieb 52 wird die Wickelstange 34 in der Längsachse z um die vorgegebene Länge in der entgegengesetzten Richtung bewegt. Dabei wird das mit der Durchführungsöffnung für den zu verlegenden Wickeldraht versehene, aus dem Längsspalt 37 im Schwenkgehäuse 36 herausragende freie Ende der Wickelnadel 38 über der zweiten Nut 106 b wieder auf die andere Statorseite und über die freien Enden der Führungsstege 112 hinaus geführt. Nach einer weiteren Verschiebung der Wickelnadel 38 radial nach Aussen erfolgt über den programmierbaren Antrieb 56 eine weitere Schwenkbewegung des Schwenkgehäuses 36 zurück zur Positionierung der Wickelnadel 38 im Bereich der ersten Nut 106 a. An dieser Stelle erfolgt wieder eine Verschiebung der Wickelnadel 38 radial nach Innen, bis das den Wickeldraht führende freie Ende der Wickelnadel 38 über der ersten Nut 106 a positioniert ist.

Der vorstehend beschriebene Bewegungsablauf der Wickelstange 34 und der Wickelnadel 38 zusammen mit der Schwenkbewegung des Schwenkgehäuses 36 wird so lange wiederholt, bis die gewünschte Anzahl Windungen der Spule eines Wickelschrittes erreicht ist. Auf die oben beschriebene Weise erfolgt auch die Wicklung der restlichen Spulen.

Anstelle einer Schwenkbewegung des Schwenkgehäuses 36 kann die relative Verschiebung der Wickelnadel 38 zur Positionierung des den Wickeldraht führenden freien Endes der Wickelnadel 38 über der entsprechenden Nut auch über den der Spannvorrichtung 60 zugeordneten, programmgesteuerten Antrieb 74 erfolgen.

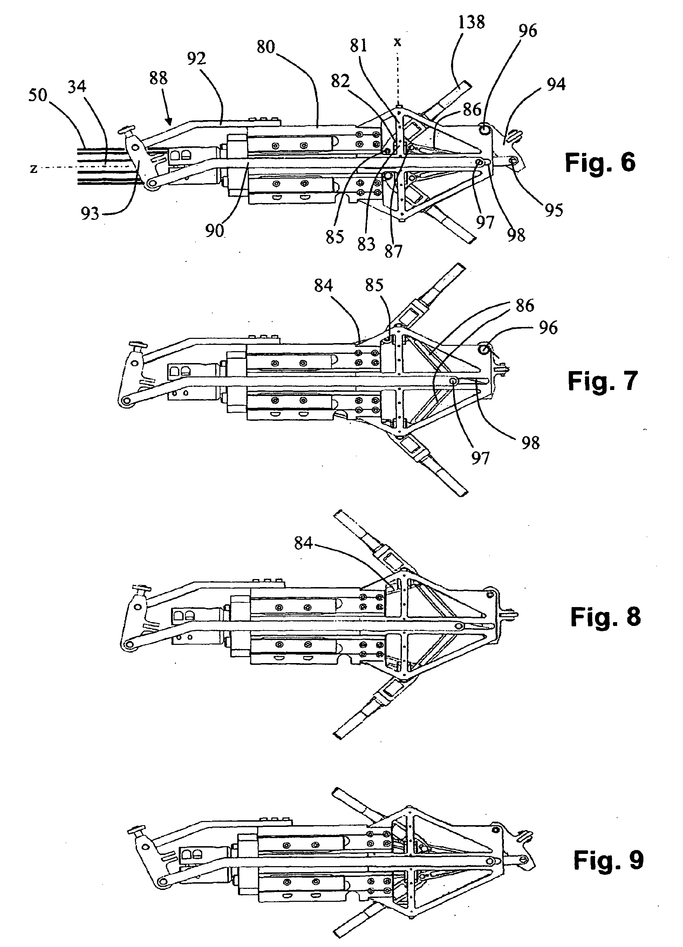

Bei einer in den Fig. 6 bis 9 gezeigten Ausführungsform einer sowohl in der Verschieberichtung x verschiebbaren als auch in der durch die Längsachse z und die Verschieberichtung x definierten Ebene in einem Winkel von beispielsweise etwa 90° symmetrisch um die Verschieberichtung x schwenkbaren Wickelnadel 138 ist zur Verschiebung der Wickelnadel 138 in der Verschieberichtung x ein mit der Wickelstange 34 verbundener Wickelnadelhalter 80 vorgesehen. Bei der gezeigten Ausführungsform sind zwei Wickelnadeln 138 zum gleichzeitigen Wickeln von zwei einander diametral gegenüberliegenden Nuten 106 eines Stators 100 vorgesehen. Der Einfachheit halber werden nachfolgend nur die für den Bewegungsablauf der in der Zeichnung oberen Wickelnadel 138 verantwortlichen Teile der bezüglich der Längsachse z paarweise symmetrisch zu einander angeordneten Wickelnadeln beschrieben.

Am Wickelnadelhalter 80 ist in der Verschieberichtung x eine Führungsschiene 81 mit einem auf dieser verschiebbar gelagerten Gleitstück 82 angeordnet. Die am Gleitstück 82 schwenkbar angelenkte Wickelnadel 138 weist im Bereich ihres Drehpunktes 83 zwei Gelenkpunkte 85, 87 auf. Eine erste Hebelstange 84 verbindet einen ersten Gelenkpunkt 85 mit der im Innern der Wickelstange 34 koaxial zu dieser verschiebbar gelagerten Steuerstange 50. Durch eine programmierbare Verschiebung der Steuerstange 50 in der Längsachse z kann der Schwenkwinkel der Wickelnadel 138 auf jeden beliebigen Wert eingestellt werden.

Eine zweite Hebelstange 86 verbindet den zweiten Gelenkpunkt 87 über ein in einer Langlochführung 98 in der Längsachse z verschiebbar angeordnetes Verbindungsgelenk 97 mit einem ersten Hebelarm 90 eines Hebelgelenksystems 88. Das Verbindungsgelenk 97 entspricht bei paarweiser Anordnung der Hebelstangen 86 dem Gelenk eines Kniehebels. Das Verbindungsgelenk 97 bildet den Knickpunkt des durch die beiden Hebelstangen 86 gebildeten Kniehebels. Durch Verschieben des Verbindungsgelenks 97 in der Längsachse z öffnet bzw. schliesst sich das Kniehebelgelenk und bewegt dadurch das Gleitstück 82 und damit die Wickelnadel 138 in Verschieberichtung x nach Aussen bzw. Innen. Die Verschiebung der Hebelstange/n 86 erfolgt ebenfalls über eine in der Zeichnung nicht näher dargestellte programmierbare NC-Achse.

Das eine Ende des ersten Hebelarms 90 des Hebelgelenksystems 88 ist über ein erstes Verbindungsglied 93 mit dem einen Ende eines im wesentlichen parallel zum ersten Hebelarm 90 geführten zweiten Hebelarms 92 gelenkig verbunden. Das andere Ende des zweiten Hebelarms 92 ist starr mit dem Wickelnadelhalter 80 verbunden. Das andere Ende des ersten Hebelarms 90 ist über einen ersten Anlenkpunkt 95 mit einem zweiten Verbindungsglied 94 verbunden. Das zweite Verbindungsglied 94 ist über einen zweiten Anlenkpunkt 96 am Wickelnadelhalter 80 angelenkt.

Die Funktionsweise des Wickelnadelhalters 80 mit dem Hebelgelenksystem 88 wird nachfolgend anhand der in den Fig. 6 bis 9 gezeigten vier verschiedenen Wickelnadelstellungen erläutert.

In der in Fig. 6 gezeigten Position ist die Wickelnadel 138 bezüglich der Verschiebeachse x nach Innen verschoben und ist bezüglich der Verschiebeachse x um einen Winkel von etwa +45° von der Steuerstange 50 weg verschwenkt. Über die Steuerstange 50 und das Hebelgelenksystem 88 wird das Gleitstück 82 auf der Führungsschiene 81 und damit die an diesem angelenkte Wickelnadel 138 bezüglich der Verschiebeachse x maximal nach Aussen verschoben (Fig. 7). In einem nächsten Schritt wird über die Steuerstange 50 und die erste Hebelstange 84 die Wickelnadel 138 um einen Winkel von etwa 90° bis zu einem Winkel von etwa -45° bezüglich der Verschiebeachse x zur Steuerstange hin verschwenkt (Fig. 8). In einem weiteren Schritt wird über das Hebelgelenksystem 88 das Gleitstück 82 auf der Führungsschiene 81 und damit die an diesem angelenkte Wickelnadel 138 bezüglich der Verschiebeachse x maximal nach Innen verschoben (Fig. 9).

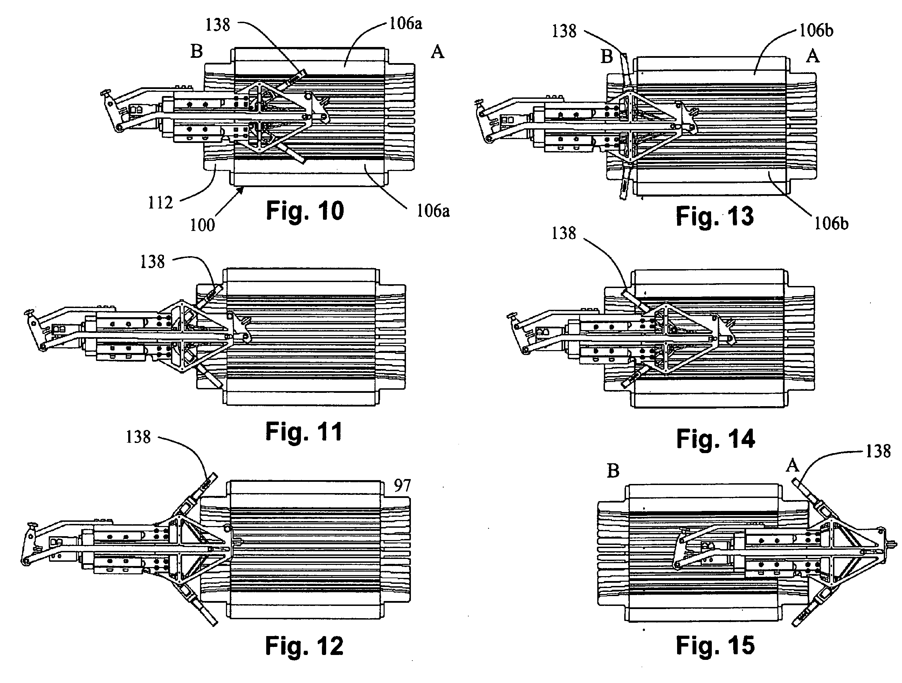

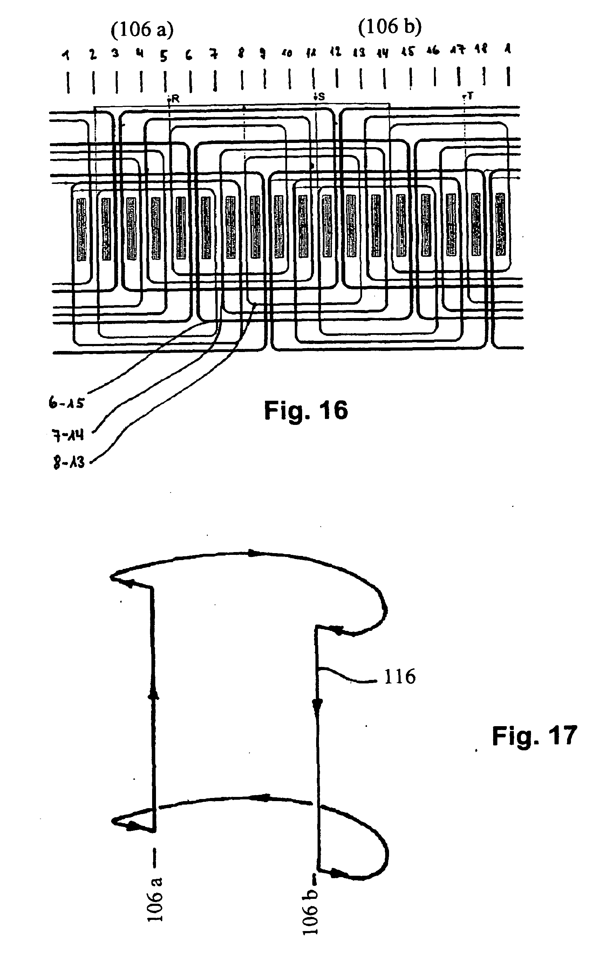

In den Fig. 10 bis 15 ist der Funktionsablauf beim Einlegen einer Windung von Wickeldraht 116 in die Nuten 106 eines Stators 100 dargestellt. Die Bewegung der Wickelnadel 138 führt zu der in Fig. 17 gezeigten Form der eingelegten Windung.

Nachfolgend wird der in den Fig. 10 bis 15 gezeigte Funktionsablauf unter Bezugnahme auf die vorstehend anhand der Fig. 6 bis 9 beschriebenen Positionen der Wickelnadel 138 beschrieben.

Gemäss Fig. 10 und 11 erfolgt das Einlegen von Wickeldraht 116 in zwei einander diametral gegenüberliegende erste Nuten 106 a des Stators 100 von einer Stirnseite A des Stators zur gegenüberliegenden Stirnseite B über die freien Enden der Führungsstege 112 hinaus in der in Fig. 6 gezeigten Stellung der Wickelnadel 138. Gemäss Fig. 12 erfolgt nun die Verschiebung der Wickelnadel 138 radial nach Aussen (Fig. 7). Anschliessend erfolgt über den programmierbaren Antrieb 56 eine Schwenkbewegung des Schwenkgehäuses 36 und damit des die Wickelnadel 38 in ihrer Bewegung in der Längsachse z führenden Längsspaltes 37 zur Positionierung der Wickelnadel 138 im Bereich der zweiten Nut 106 b. Anstelle einer Schwenkbewegung des Schwenkgehäuses 36 kann die Positionierung der Wickelnadel 138 über der zweiten Nut 106 b auch über den programmierbaren Antrieb 74 durch eine entsprechende Drehung des Stators 100 erfolgen. Gemäss Fig. 13 wird nun die Wickelnadel 138 in die zweite Position verschwenkt (Fig. 8) und gemäss Fig. 14 radial nach Innen verschoben (Fig. 9). In dieser Stellung der Wickelnadel erfolgt das Einlegen von Wickeldraht 116 von der Stirnseite B zu Stirnseite A des Stators 100 in zwei einander diametral gegenüberliegende Nuten 106b. Fig. 15 zeigt die Wickelnadel 138 nach dem Austritt aus dem Stator 100 bei der Stirnseite A in der in Fig. 8 gezeigten Stellung. Es folgt nun auf analoge Weise wie vorstehend beschrieben das Verschwenken der Wickelnadel 138 in die in Fig. 7 und nachfolgend in die in Fig.6 gezeigte Position. Nach anschliessendem Verschwenken des Schwenkgehäuses 36 zur Positionierung der Wickelnadel 138 über der ersten Nut 106a erfolgt das Einlegen von Wickeldraht 116 in die zwei einander diametral gegenüberliegenden ersten Nuten 106 a des Stators 100 von der Stirnseite A des Stators zur gegenüberliegenden Stirnseite B. Der vorstehend beschriebene Vorgang wiederholt sich bis zur vollständigen Wicklung.

Das in Fig. 16 gezeigte Wickelschema für einen Stator eines Elektromotors mit einer konzentrischen Wicklung zeigt die Verteilung von 18 Spulen mit je 6 grossen, mittleren und kleinen Windungen in die von 1 bis 18 nummerierten Nuten entsprechend drei verschiedenen Wickelschritten. Drei Spulen mit den Wickelschritten 6-15, 7-14 und 8-13 mit entsprechend 9, 7 bzw. 5 dazwischen liegenden Polhörnern sind beispielhaft angegeben.

Fig. 17 zeigt die Form einer einzelnen, entsprechend der Bewegung der Wickelnadel 38, 138 in die Nuten 106 a, b eingelegten Windung aus Wickeldraht 116.

### Bezugszeichenliste

- 10: Anlage
- 12: Maschinenrahmen
- 14: horizontale Montageebene
- 16: Antriebseinheit
- 18: Wickeleinheit
- 20: Beschickungssystem
- 22: erste Statoraufnahme
- 23: zweite Statoraufnahme
- 24: Statorpositioniervorrichtung
- 26: Stützvorrichtung
- 28: Schlitten
- 30: Drehtisch
- 32: Hebelgelenk
- 34: Wickelstange
- 36: Schwenkgehäuse
- 37: Längsspalt in 36
- 38: Wickelnadel
- 42: zentraler Stützzapfen
- 44: Mitnehmerzapfen
- 46: zentrale Aufnahme für 40
- 48: Mitnehmeraufnahme
- 50: Steuerstange
- 52: Antrieb für Längsverschiebung von 34
- 54: Antrieb für Längsverschiebung von 50
- 56: Antrieb für Schwenkbewegung von 36
- 58: Zahnriemenantrieb für 40
- 60: Spannvorrichtung für 22, 23
- 64: Drahtvorratsbehälter
- 66: Einlauftrichter
- 72: Ringflansch
- 74: Antrieb für 22, 23
- 78: Antrieb für 28
- 80: Wickelnadelhalter
- 81: Führungsschiene
- 82: Gleitstück
- 83: Drehpunkt
- 84: erste Hebelstange
- 85: erster Gelenkpunkt
- 86: zweite Hebelstange
- 87: zweiter Gelenkpunkt
- 88: Hebelgelenksystem
- 90: erster Hebelarm
- 92: zweiter Hebelarm
- 93: erstes Verbindungsglied
- 94: zweites Verbindungsglied
- 95: erster Anlenkpunkt
- 96: zweiter Anlenkpunkt
- 97: Verbindungsgelenk
- 98: Langlochführung
- 100: Stator
- 102: ringförmiges Blechpaket
- 104: Polhörner
- 106: Nuten
- 108: Stirnseite von 110
- 110: Endscheibe
- 112: Führungssteg
- 114: Fussteil von 112
- 138: Wickelnadel an 80
- s: Statorachse
- t: Statoraufnahmeachse
- u: Drehachse von 30
- z: Längsachse
- x: Verschiebeachse

## Patentansprüche

1. Vorrichtung zum automatischen Wickeln von Spulen in Nuten (106) eines Stators (100) einer elektrischen Maschine, mit einer in einer Längsachse (z) axial verschiebbaren Wickelstange (34), einer von der Wickelstange (34) rechtwinklig zur Längsachse (z) in einer Verschieberichtung (x) abragenden Wickelnadel (38, 138) und einer ringförmigen Spannvorrichtung (60) einer Statoraufnahme (22, 23) mit in der Längsachse (z) liegender Aufnahmeachse (t),
**dadurch gekennzeichnet, dass**
die Wickelnadel (38, 138) über eine im Innern der Wickelstange (34) und koaxial zu dieser in der Längsachse (z) verschiebbar gelagerte Steuerstange (50) in Verschieberichtung (x) verschiebbar ist und die Wickelstange (34) und die Steuerstange (50) zur programmgesteuerten axialen Verschiebung der Wickelstange (34) und der Steuerstange (50) in der Längsachse (z) und die Wickelnadel (38, 138) zur Ausführung einer programmgesteuerten Schwenkbewegung um die Achse der Wickelstange (34) mit einer Antriebseinheit (16) wirkverbunden sind.

2. Vorrichtung nach Anspruch 1, **dadurch gekennzeichnet, dass** die Spannvorrichtungen (60) der Statoraufnahmen (22, 23) zur Ausführung einer Rotationsbewegung um die Aufnahmeachse (t) mit einem programmgesteuerten Antrieb (74) wirkverbunden sind.

3. Vorrichtung nach Anspruch 1 oder 2, **dadurch gekennzeichnet, dass** zwei Statoraufnahmen (22, 23) mit je einer Spannvorrichtung (60) auf einem Drehtisch (30) angeordnet und die Spannvorrichtungen (60) mit einem programmgesteuerten Antrieb (74) wirkverbunden sind.

4. Vorrichtung nach einem der Ansprüche 1 bis 3, **dadurch gekennzeichnet, dass** die Wickelnadel (38, 138) an einem parallel zur Wickelstange (34) verlaufenden und zur Ausführung der Schwenkbewegung der Wickelnadel (38, 138) mit der Antriebseinheit (16) wirkverbundenen Führungselement (37) in der Längsachse (z) gleitend verschiebbar gelagert ist.

5. Vorrichtung nach Anspruch 4, **dadurch gekennzeichnet, dass** die Wickelnadel (38, 138) in einem Längsspalt (37) eines mit einem programmgesteuerten Antrieb (56) wirkverbundenen und in der Antriebseinheit (16) gelagerten Schwenkgehäuses (36) gleitend verschiebbar gerührt ist.

6. Vorrichtung nach Anspruch 5, **dadurch gekennzeichnet, dass** die Antriebseinheit (16) mit dem Schwenkgehäuse (36) mit einem programmgesteuerten Antrieb (78) auf einem Schlitten (28) in der Längsachse (z) verfahrbar ist.

7. Vorrichtung nach Anspruch 5 oder 6, **dadurch gekennzeichnet, dass** das Schwenkgehäuse (36) an seinem der Antriebseinheit (16) fernen Ende über Stütz- und Positionierelemente (42, 46; 44, 48) stütz- und schwenkbar ist.

8. Vorrichtung nach Anspruch 7, **dadurch gekennzeichnet, dass** das Schwenkgehäuse (36) an seinem der Antriebseinheit (16) fernen Ende mit einer Stützvorrichtung (26) verbindbar ist.

9. Vorrichtung nach Anspruch 8, **dadurch gekennzeichnet, dass** das Schwenkgehäuse (36) zur Ausführung der Schwenkbewegung in der Stützvorrichtung (26) mit einem synchron zur Antriebseinheit (16) geschalteten programmgesteuerten Antrieb (56) wirkverbunden ist.

10. Vorrichtung nach Anspruch 8 oder 9 und 3, **dadurch gekennzeichnet, dass** die Stützvorrichtung (26) in der Drehachse (u) des Drehtisches (30) angeordnet ist.

11. Vorrichtung nach einem der Ansprüche 1 bis 10, **dadurch gekennzeichnet, dass** die Wickelnadel (138) programmgesteuert in der durch die Längsachse (z) und die Verschieberichtung (x) definierten Ebene um die Verschieberichtung (x) schwenkbar ist.

12. Vorrichtung nach Anspruch 11, **dadurch gekennzeichnet, dass** die Wickelnadel (138) in einem Winkel von ± 30 bis ± 60°, vorzugsweise etwa ± 45°, um die Verschieberichtung (x) schwenkbar ist.

13. Vorrichtung nach einem der Ansprüche 1 bis 12, **dadurch gekennzeichnet, dass** die Wickelnadel (38, 138) zur Verschiebung in Verschieberichtung (x) über ein Hebelgelenk (32; 84, 85) mit der Steuerstange (50) verbunden ist.

## Claims

1. Apparatus for automatically winding coils in slots (106) of a stator (100) of an electrical machine, with a winding bar (34), which is capable of being displaced axially in a longitudinal axis (z), a winding needle (38, 138), which protrudes at right angles with respect to the longitudinal axis (z) in a displacement direction (x) from the winding bar (34), and a ringshaped tensioning apparatus (60) of a stator holder (22, 23) with a holder axis (t) lying in the longitudinal axis (z), **characterized in that** the winding needle (38, 138) is capable of being displaced in the displacement direction (x) via a control rod (50) mounted displaceably in the interior of the winding bar (34) and coaxially with respect thereto in the longitudinal axis (z), and the winding bar (34) and the control rod (50), for the program-controlled axial displacement of the winding bar (34) and the control rod (50) in the longitudinal axis (z), and the winding needle (38, 138), for implementing a program-controlled pivoting movement about the axis of the winding bar (34), are operatively connected to a drive unit (16).

2. Apparatus according to Claim 1, **characterized in that** the tensioning apparatuses (60) of the stator holders (22, 23), for implementing a rotational movement about the holder axis (t), are operatively connected to a program-controlled drive (74).

3. Apparatus according to Claim 1 or 2, **characterized in that** two stator holders (22, 23), each having a tensioning apparatus (60), are arranged on a turntable (30), and the tensioning apparatuses (60) are operatively connected to a program-controlled drive (74).

4. Apparatus according to one of Claims 1 to 3, **characterized in that** the winding needle (38, 138) is mounted so as to be capable of being displaced in sliding fashion in the longitudinal axis (z) on a guide element (37), which runs parallel to the winding bar (34) and is operatively connected to the drive unit (16) for performing the pivoting movement of the winding needle (38, 138).

5. Apparatus according to Claim 4, **characterized in that** the winding needle (38, 138) is guided so as to be capable of being displaced in sliding fashion in a longitudinal gap (37) of a pivoting housing (36), which is operatively connected to a program-controlled drive (56) and is mounted in the drive unit (16).

6. Apparatus according to Claim 5, **characterized in that** the drive unit (16) can be moved with the pivoting housing (36) by a program-controlled drive (78) on a carriage (28) in the longitudinal axis (z).

7. Apparatus according to Claim 5 or 6, **characterized in that** the pivoting housing (36) is capable of being supported and pivoted at its end remote from the drive unit (16) via supporting and positioning elements (42, 46; 44, 48).

8. Apparatus according to Claim 7, **characterized in that** the pivoting housing (36) can be connected at its end remote from the drive unit (16) to a supporting apparatus (26).

9. Apparatus according to Claim 8, **characterized in that** the pivoting housing (36), for implementing the pivoting movement in the supporting apparatus (26), is operatively connected to a program-controlled drive (56), which is switched in synchronism with the drive unit (16).

10. Apparatus according to Claim 8 or 9 and 3, **characterized in that** the supporting apparatus (26) is arranged in the axis of rotation (u) of the turntable (30).

11. Apparatus according to one of Claims 1 to 10, **characterized in that** the winding needle (138) can be pivoted, in program-controlled fashion, about the displacement direction (x) in the plane defined by the longitudinal axis (z) and the displacement direction (x).

12. Apparatus according to Claim 11, **characterized in that** the winding needle (138) can be pivoted at an angle of ±30 to ±60°, preferably approximately ±45°, about the displacement direction (x).

13. Apparatus according to one of Claims 1 to 12, **characterized in that** the winding needle (38, 138), for displacement in the displacement direction (x), is connected to the control rod (50) via a lever hinge (32; 84, 85).

## Revendications

1. Dispositif pour l'enroulement automatique de bobines dans des rainures (106) d'un stator (100) d'une machine électrique, comprenant une barre d'enroulement (34) déplaçable axialement dans un axe longitudinal (z), une aiguille d'enroulement (38, 138) saillant à angle droit par rapport à l'axe longitudinal (z) dans une direction de déplacement (x) depuis la barre d'enroulement (34), et un dispositif de serrage de forme annulaire (60) d'un logement statorique (22, 23) avec un axe de réception (t) situé dans l'axe longitudinal (z),
**caractérisé en ce que**
l'aiguille d'enroulement (38, 138) est déplaçable dans la direction de déplacement (x) par le biais d'une barre de commande (50) montée de manière déplaçable à l'intérieur de la barre d'enroulement (34) et coaxialement à celle-ci dans l'axe longitudinal (z), et la barre d'enroulement (34) et la barre de commande (50), pour le déplacement axial à commande programmée de la barre d'enroulement (34) et de la barre de commande (50) dans l'axe longitudinal (z), et l'aiguille d'enroulement (38, 138), pour réaliser un mouvement de pivotement à commande programmée autour de l'axe de la barre d'enroulement (34), sont connectées fonctionnellement à une unité d'entraînement (16).

2. Dispositif selon la revendication 1, **caractérisé en ce que** les dispositifs de serrage (60) des logements statoriques (22, 23) sont connectés fonctionnellement à un entraînement à commande programmée (74) pour réaliser un mouvement de rotation autour de l'axe de réception (t).

3. Dispositif selon la revendication 1 ou 2, **caractérisé en ce que** deux logements statoriques (22, 23) avec un dispositif de serrage respectif (60) sont disposés sur une table tournante (30) et les dispositifs de serrage (60) sont connectés fonctionnellement à un entraînement à commande programmée (74).

4. Dispositif selon l'une quelconque des revendications 1 à 3, **caractérisé en ce que** l'aiguille d'enroulement (38, 138) est montée de manière déplaçable par glissement dans l'axe longitudinal (z) sur un élément de guidage (37) s'étendant parallèlement à la barre d'enroulement (34) et connecté fonctionnellement à l'unité d'entraînement (16) pour réaliser le mouvement de pivotement de l'aiguille d'enroulement (38, 138).

5. Dispositif selon la revendication 4, **caractérisé en ce que** l'aiguille d'enroulement (38, 138) est guidée à coulissement dans une fente longitudinale (37) d'un boîtier pivotant (36) connecté fonctionnellement à un entraînement à commande programmée (56) et monté dans l'unité d'entraînement (16).

6. Dispositif selon la revendication 5, **caractérisé en ce que** l'unité d'entraînement (16) peut être déplacée avec le boîtier pivotant (36) avec un entraînement à commande programmée (78) sur un chariot (28) dans l'axe longitudinal (z).

7. Dispositif selon la revendication 5 ou 6, **caractérisé en ce que** le boîtier pivotant (36) peut être supporté et pivoté sur son extrémité éloignée de l'unité d'entraînement (16) par le biais d'éléments de support et de positionnement (42, 46 ; 44, 48).

8. Dispositif selon la revendication 7, **caractérisé en ce que** le boîtier pivotant (36) peut être connecté à son extrémité éloignée de l'unité d'entraînement (16) à un dispositif de support (26).

9. Dispositif selon la revendication 8, **caractérisé en ce que** le boîtier pivotant (36) est connecté fonctionnellement pour la réalisation du mouvement de pivotement dans le dispositif de support (26) à un entraînement à commande programmée (56) branché de manière synchronisée avec l'unité d'entraînement (16).

10. Dispositif selon les revendications 8 ou 9 et 3, **caractérisé en ce que** le dispositif de support (26) est disposé dans l'axe de rotation (u) de la table tournante (30).

11. Dispositif selon l'une quelconque des revendications 1 à 10, **caractérisé en ce que** l'aiguille d'enroulement (138) peut être pivotée autour de la direction de déplacement (x) par commande programmée dans le plan défini par l'axe longitudinal (z) et la direction de déplacement (x)

12. Dispositif selon la revendication 11, **caractérisé en ce que** l'aiguille d'enroulement (138) peut être pivotée suivant un angle de ±30 à ±60°, de préférence d'environ ±45°, autour de la direction de déplacement (x).

13. Dispositif selon l'une quelconque des revendications 1 à 12, **caractérisé en ce que** l'aiguille d'enroulement (38, 138) est connectée à la barre de commande (50) pour le déplacement dans la direction de déplacement (x) par le biais d'une articulation à levier (32 ; 84, 85).
